# EUROPÄISCHE PATENTSCHRIFT

(11) **EP 3 429 797 B1**
(45) Veröffentlichungstag und Bekanntmachung des Hinweises auf die Patenterteilung: **07.04.2021**
(21) Anmeldenummer: 17702382.7
(22) Anmeldetag: 01.02.2017
(51) Int. Cl.: B23K 26/12, B23K 26/08, B23K 26/70

(54) **LASER-REMOTE-BEARBEITUNGSANLAGE UND VERFAHREN ZUM BETRIEB EINER LASER-REMOTE-BEARBEITUNGSANLAGE**
LASER-REMOTE WORKING STATION AND METHOD FOR USING A LASER-REMOTE WORKING STATION
STATION DE TRAVAIL AU LASER COMMANDÉE À DISTANCE AND METHODE POUR UTILISER UNE STATION DE TRAVAIL AU LASER COMMANDÉE À DISTANCE

(30) Priorität: 16.03.2016 DE 102016204345
(43) Veröffentlichungstag der Anmeldung: 23.01.2019
(73) Patentinhaber: Bayerische Motoren Werke Aktiengesellschaft, 80809 München (DE)
(72) Erfinder: BECK, Stefan, 93309 Kelheim (DE)
(86) Internationale Anmeldenummer: PCT/EP2017/052132
(87) Internationale Veröffentlichungsnummer: WO 2017/157566

(56) Entgegenhaltungen:
- DE-A1-102010 042 777
- US-A- 5 643 477
- US-A1- 2002 002 418

## Beschreibung

Die Erfindung betrifft eine Laser-Remote-Bearbeitungsanlage und ein Verfahren zum Betrieb einer Laser-Remote-Bearbeitungsanlage, insbesondere eine Laser-Remote-Schweißanlage.

Beim Remote-Laserstrahlbearbeiten wird ein Laserstrahl mit großem Arbeitsabstand auf ein Werkstück gerichtet. Remote-Laserwerkzeuge verwenden üblicherweise eine Scannertechnologie, mit dem der Laserstrahl in zumindest zwei Achsen ausgelenkt werden kann. Aufgrund des großen Arbeitsabstands bewirken bereits geringfügige Winkeländerungen eine große Auslenkung des Laserstrahls auf dem Werkstück, wodurch sich große Arbeitsgeschwindigkeiten erreichen lassen. Diese können noch gesteigert werden, indem das Remote-Laserwerkzeug von einem, insbesondere mehrachsigen, Industrieroboter, geführt wird. Das Werkstück wird zur Bearbeitung auf einer Bearbeitungsstation positioniert und kann in einer geeigneten Werkstückaufnahme gespannt bzw. fixiert sein.

Die mehrachsige Bewegung solcher Remote-Laservorrichtungen erfordert jedoch einen besonderen Schutz der Umgebung vor der Laserstrahlung. Deshalb sind Laser-Remote-Bearbeitungsanlagen üblicherweise als Laserzellen ausgestaltet, die vollständig von einer Schutzeinhausung umgeben sind. Die Schutzeinhausung hat die Aufgabe, einem auftreffenden Strahl zumindest für kurze Zeit standzuhalten, um ein unkontrolliertes Austreten der Laserstrahlung zu verhindern und kann z.B. mit passiven oder aktiven Schutzwänden realisiert sein. Das Remote-Laserwerkzeug sowie der das Werkzeug führende Arbeitsroboter sind innerhalb der Schutzeinhausung angeordnet. Ein Sicherheitssystem garantiert, dass die Laserbearbeitung nur bei geschlossener Schutzeinhausung stattfinden kann.

Weitere Anlagenbestandteile, wie z.B. die an das Werkzeug gekoppelte Laserquelle und eine Steuerungsvorrichtung zur Anlagensteuerung, können ebenso außerhalb der Schutzeinhausung vorgesehen sein. Laser-Remote-Bearbeitungsanlagen gemäß dem Oberbegriff von Patentanspruch 1 sind allgemein bekannt.

Zum Betrieb der Anlage wird üblicherweise das Werkstück durch eine verschließbare Öffnung in das Innere der Laserzelle und dort auf die Bearbeitungsstation verbracht. Sicherheitssysteme sorgen dafür, dass eine Laserbearbeitung erst stattfinden kann, wenn die Schutzeinhausung wieder vollständig geschlossen ist. Dies führt in der Praxis zu langen Nebenzeiten, während denen die Laserquelle und das Remote-Werkzeug im Standby sind. Laserquelle und Bearbeitungsoptik werden nicht optimal ausgenutzt und zur Erbringung hoher Stückzahlen wäre eine weitere Laserzelle notwendig.

Die Druckschrift US 5 643 477 A bildet den Oberbegriff der Ansprüche 1 und 11 und beschreibt eine Laserbearbeitungsanlage mit zwei Bearbeitungsstationen und einem Arbeitsroboter. Jede dieser Bearbeitungsstationen kann über einen Klappmechanismus aus der Laserzelle hinausbewegt werden und dann von außerhalb bestückt werden. Während des Umklappens muss der Bearbeitungsprozess unterbrochen werden. Die Druckschrift DE 10 2010 042 777 A1 offenbart eine Laserschneidanlage mit drei Bearbeitungsstationen und einem Pufferbereich innerhalb einer Schutzeinhausung. Weiterhin ist eine Linearschleuse in der Schutzeinhausung vorgesehen. Die Linearschleuse ist als eine weitere Laserschneideinrichtung eingerichtet.

Die Druckschrift US 2002/002418 A1 zeigt eine Laserarbeitszelle mit einem Handhabungsroboter, der eingerichtet ist um Werkstücke, die aus einem Pufferbereich in eine Schleuse verbracht werden, von der Schleuse zu einer von zwei Positioniervorrichtungen zu transportieren. An den Positioniervorrichtungen erfolgt eine nachfolgende Laserbearbeitung.

Aufgabe der Erfindung ist es, eine Laser-Remote-Bearbeitungsanlage und ein Verfahren zum Betrieb derselben anzugeben, die insbesondere hinsichtlich der Rentabilität verbessert ist.

Gelöst wird diese Aufgabe durch eine Laser-Remote-Bearbeitungsanlage, insbesondere eine Laser-Remote-Schweißanlage, mit einer von einer Schutzeinhausung umgebenen Laserzelle, in der ein Arbeitsroboter mit einem Remote-Laserwerkzeug und eine erste Bearbeitungsstation im Arbeitsbereich des Arbeitsroboters angeordnet ist. Zur Verbesserung der Rentabilität der Bearbeitungsanlage sind innerhalb der Schutzeinhausung weiterhin eine zweite Bearbeitungsstation im Arbeitsbereich des Arbeitsroboters und mindestens ein Handhabungsroboter angeordnet, mit dem Werkstücke zwischen der ersten Bearbeitungsstation oder der zweiten Bearbeitungsstation und mindestens einem Pufferbereich umpositionierbar sind. Der Pufferbereich ist zur Aufnahme von Werkstücken eingerichtet und als automatisierbar betätigbare Werkstückschleuse in die Schutzeinhausung integriert.

Erfindungsgemäß kann der Arbeitsroboter an einer der zwei Bearbeitungsstationen die Laserbearbeitung, z.B. ein Schweißen oder Schneiden, durchführen, während der Handhabungsroboter die andere Bearbeitungsstation für eine nachfolgende Bearbeitung vorbereitet und mit einem Werkstück bestückt bzw. ein bereits bearbeitetes Werkstück in den Pufferbereich verbringt. Der als Schleuse ausgebildete Pufferbereich ermöglicht, dass der Laserbearbeitungsprozess nicht unterbrochen werden muss, um Werkstücke aus oder in die Laserzelle zu bringen. Vorteilhafterweise kann eine Werkstückbearbeitung wechselweise an der ersten und zweiten Bearbeitungsstation vorgenommen werden. Die Stillstandszeiten bzw. Standby-Zeiten der Laserquelle können reduziert werden und die Taktzeit der Anlage kann im Vergleich zu herkömmlichen Laser-Remote-Anlagen reduziert werden. Beispielsweise kann die Taktzeit im Wesentlichen von der Prozesszeit bestimmt werden.

Das Werkstück kann aus einem einzelnen Bauteil oder zwei oder mehr Bauteilen bestehen. Bei den Bauteilen handelt es sich vorzugsweise um Blechbauteile und insbesondere um Karosserieanbauteile.

Der Pufferbereich dient zur Zwischenlagerung von bereits bearbeiteten oder noch zu bearbeitenden Werkstücken, und kann z.B. entsprechende Werkstückaufnahmen aufweisen. Die Ausbildung als Werkstückschleuse ermöglicht es, Werkstücke in die Laserzelle einzuschleusen bzw. auszuschleusen, ohne dass Laserstrahlung aus der Schutzeinhausung austreten kann. Die Schleuse ist automatisierbar betätigbar und wird vorzugsweise von einer zentralen Steuerungsvorrichtung der Remote-Laserbearbeitungsanlage, z.B. einer speicherprogrammierbaren Steuerung (SPS), gesteuert.

In einer bevorzugten Ausgestaltung ist die Werkstückschleuse als Linearschleuse mit sich gegenüberliegendem Innentor und Außentor ausgebildet. Die Werkstückschleusung erfolgt durch wechselseitiges Öffnen von Innentor und Außentor. Innen- und Außentor sind beispielsweise in Form von Rolltoren ausgeführt.

Zur Realisierung einer vollautomatischen Prozessführung weist die Remote-Laser-Bearbeitungsanlage in einer Ausgestaltung zumindest einen äußeren Handhabungsroboter auf, der außerhalb der Schutzeinhausung angeordnet ist und mit dem Werkstücke aus der Werkstückschleuse entnehmbar sind oder in diese verbringbar sind. Weiterhin kann der äußere Handhabungsroboter den Werkstücktransport außerhalb der Laserzelle von oder zu weiteren Bearbeitungsanlagen bzw. Puffersystemen übernehmen, beispielsweise innerhalb eines Fertigungssystems.

Zur Optimierung der Werkstückzuordnung zu den Bearbeitungsstationen und zur Verkürzung der Transportwege sind in einer Ausgestaltung in der Laser-Remote-Bearbeitungsanlage zwei, vorzugsweise voneinander beabstandete, Pufferbereiche vorgesehen, wobei ein erster Pufferbereich der ersten Bearbeitungsstation zugeordnet ist und ein zweiter Pufferbereich der zweiten Bearbeitungsstation zugeordnet ist.

Die zum Bauteilhandling benötigte Zeit lässt sich reduzieren, indem der Pufferbereich in einer Ausgestaltung eine erste und zweite Schleusenkammer aufweist, die räumlich voneinander getrennt und unabhängig voneinander betätigbar sind. Vorzugsweise ist jede Schleusenkammer als eigenständige Linearschleuse ausgebildet. Das bearbeitete Werkstück kann in eine Schleusenkammer eingebracht werden, während die andere Schleusenkammer bereits das nachfolgend zu bearbeitende Werkstück enthält.

In einer bevorzugten Ausgestaltung sind innerhalb der Schutzeinhausung zwei Handhabungsroboter vorgesehen, wobei ein erster Handhabungsroboter der ersten Bearbeitungsstation und dem ersten Pufferbereich zugeordnet ist und der zweite Handhabungsroboter der zweiten Bearbeitungsstation und dem zweiten Pufferbereich zugeordnet ist. Weiterhin sind zwei äußere Handhabungsroboter außerhalb der Schutzeinhausung angeordnet, wobei ein erster äußerer Handhabungsroboter dem ersten Pufferbereich zugeordnet ist und ein zweiter äußerer Handhabungsroboter dem zweiten Pufferbereich zugeordnet ist. Die Zuordnung von Robotern, Pufferbereichen und Bearbeitungsstationen zueinander betrifft einen gemeinsamen Werkstückfluss innerhalb der Laser-Remote-Bearbeitungsanlage. Zusätzlich ist eine entsprechende räumliche Zuordnung der entsprechenden Komponenten möglich. Diese Ausgestaltung ermöglicht insbesondere zwei voneinander getrennt stattfindende Materialflüsse durch den ersten und zweiten Pufferbereich. Die daraus resultierende höhere Flexibilität ergibt eine gute Einbindbarkeit der Anlage in bestehende Produktions- oder Fertigungssysteme, wie z.B. eine Fertigungsstraße.

In einer Ausgestaltung ist die Laser-Remote-Bearbeitungsanlage durch den äußeren Handhabungsroboter oder die äußeren Handhabungsroboter in zumindest eine Fertigungslinie eingebunden.

In einer Ausgestaltung sind die Handhabungsroboter und der Arbeitsroboter Mehrachs-Gelenkarmroboter mit z.B. fünf oder mehr Achsen und die Handhabungsroboter verfügen zusätzlich über eine Linearachse. Die Handhabungsroboter sind zum Handling der Werkstücke eingerichtet und weisen z.B. eine geeignete Greifvorrichtung auf. Der Arbeitsroboter führt mittels des an seiner Handachse angeordneten Laser-Werkzeugs die Werkstückbearbeitung durch.

Die Laser-Remote-Bearbeitungsanlage kann weiterhin über eine Strahlquelle und eine Steuerungsvorrichtung zur Steuerung des Bearbeitungsprozesses verfügen. Die Steuerungsvorrichtung ist in einer Ausgestaltung programmtechnisch oder schaltungstechnisch dazu eingerichtet, den Betrieb der Anlage so zu steuern, dass wechselweise ein LaserBearbeitungsprozess an einer der Bearbeitungsstationen durchgeführt wird, während simultan eine Vorbereitung der anderen Bearbeitungsstation erfolgt. Hierzu kann die Steuerungsvorrichtung neben dem Laserbearbeitungsprozess weiterhin z.B. die Roboterbewegungen und Schleusentore steuern.

Hinsichtlich des Betriebs einer Remote-Bearbeitungsanlage wird die Aufgabe der Erfindung gelöst durch ein Verfahren, bei dem in einem Schritt a) eine Werkstückbearbeitung an einer von zwei Bearbeitungsstationen innerhalb einer Schutzeinhausung einer Laserzelle durch einen Arbeitsroboter mit Laser-Remote-Werkzeug durchgeführt wird und in einem Schritt b) die andere Bearbeitungsstation durch einen Handhabungsroboter für eine nachfolgende Werkstückbearbeitung vorbereitet wird, wobei das Vorbereiten der anderen Bearbeitungsstation die Schritte umfasst eines Verbringens eines zuvor bearbeiteten Werkstücks von der anderen Bearbeitungsstation in einen Pufferbereich, der als automatisierbar betätigbare Werkstückschleuse in die Schutzeinhausung der Laserzelle integriert ist und eines Verbringens eines zu bearbeitenden Bauteils aus dem Pufferbereich zu der anderen Bearbeitungsstation. Zur Verbesserung der Anlagenrentabilität wird Schritt b) simultan zu Schritt a) ausgeführt und die Schritte a) und b) werden wechselweise für die erste und zweite Bearbeitungsstation durchgeführt. Simultan bedeutet in diesem Zusammenhang, dass die beiden Schritte zumindest teilweise zeitlich parallel stattfinden, soll jedoch nicht dahingehend verstanden werden, dass beide Schritte zwingend die gleiche Dauer oder den gleichen Anfangs- oder Endzeitpunkt haben müssen.

In einer bevorzugten Ausgestaltung weist das Verfahren den weiteren Schritt c) des Neubestückens des Pufferbereichs auf, wozu das bearbeitete Werkstück aus der Schutzeinhausung ausgeschleust und entnommen wird und ein zu bearbeitendes Werkstück in die Schutzeinhausung eingeschleust wird. Schritt c) wird nach Schritt b) und simultan zu Schritt a) ausgeführt. Schritt c) wird vorzugsweise durch zumindest einen äußeren Handhabungsroboter ausgeführt, der außerhalb der Schutzeinhausung der Laserzelle angeordnet ist. Dieser entnimmt ein zuvor bearbeitetes Werkstück aus der Schleuse und befüllt die Schleuse mit einem weiteren Werkstück.

In einer bevorzugten Ausgestaltung wird das Verfahren vollautomatisch durchgeführt, wozu die Anlage eine entsprechend eingerichtete Steuerungsvorrichtung aufweist. Weiterhin können Sicherheitssysteme vorgesehen sein, die z.B. mittels Sensorüberwachung sicherstellen, dass die Schleusentore nur wechselseitig zu öffnen sind.

Vorteilhafter Weise ist nur eine Laserzelle notwendig, weshalb die erfindungsgemäße Laser-Remote-Bearbeitungsanlage einen geringen Platzbedarf und niedrige Investitionskosten aufweist. Durch die Anlage und das Verfahren zum Betrieb derselben werden Strahlquelle und Bearbeitungsoptik bzw. Laser-Werkzeug bestmöglich ausgenutzt, wodurch, über die Laufzeit der Anlage betrachtet, die Instandhaltungs- und Betriebskosten reduziert werden können.

Das Verfahren eignet sich insbesondere zum Betrieb der voranstehend beschriebenen Laser-Remote-Bearbeitungsanlage.

Weitere vorteilhafte Ausgestaltungen der Erfindung ergeben sich aus den Unteransprüchen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
Figur 1 eine schematische Draufsicht auf eine beispielhafte Laser-Remote-Bearbeitungsanlage
Figur 2 ein Ablaufschema zur Veranschaulichung eines beispielhaften Verfahrens zum Betrieb der Laser-Remote-Bearbeitungsanlage

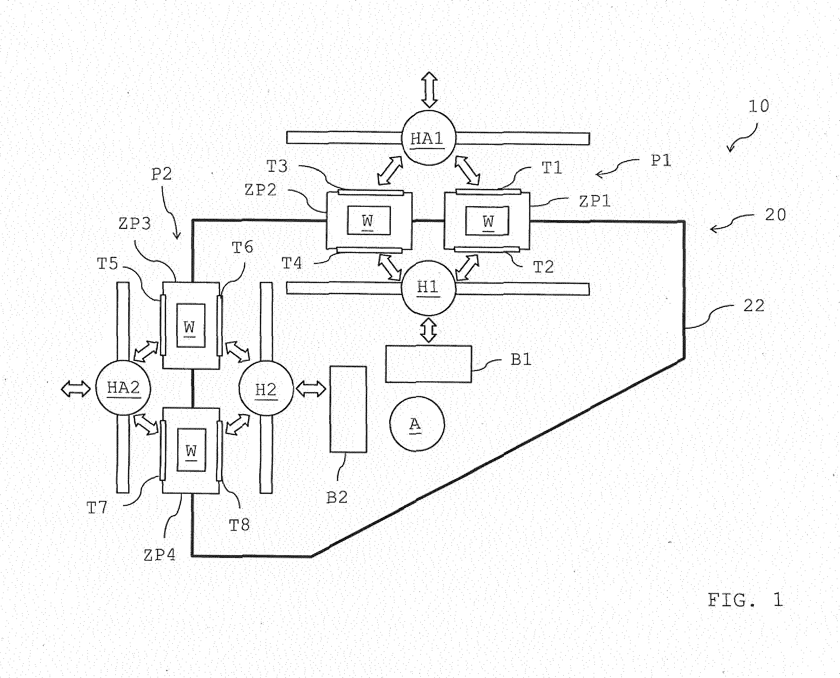

Figur 1 zeigt eine Laser-Remote-Bearbeitungsanlage 10 in Form einer Remote-Laserschweißanlage, in der Karosserieanbauteile, wie z.B. Türen oder Heckklappen, geschweißt werden.

Die Remote-Laserbearbeitungsanlage 10 weist eine Laserzelle 20 auf. Zur Abschirmung der Umgebung gegen im Inneren der Laserzelle 20 abgestrahlte bzw. fehlpositionierte Laserstrahlung ist diese von einer als Laserkabine ausgebildeten Schutzeinhausung 22 umgeben.

Die Laserzelle 20 beinhaltet einen Arbeitsroboter A in Form eines ortsfest montierten Gelenkarmroboters. Der Arbeitsroboter führt die Schweißung an den Werkstücken aus und ist hierzu an seiner Handachse mit einem nicht dargestellten herkömmlichen scannerbasierten Remote-Laserschweißwerkzeug ausgestattet. Die erforderliche Laserstrahlung wird von einer nicht dargestellten Laserquelle außerhalb der Laserzelle 20 erzeugt und über geeignete Lichtleitkabel in das Schweißwerkzeug eingekoppelt.

Im Arbeitsbereich des Arbeitsroboters A befindet sich eine erste und zweite Bearbeitungsstation B1 und B2 jeweils in Form eines ortsfesten Tisches, auf denen die Werkstücke positioniert und mittels Spannvorrichtung gespannt und fixiert werden können. Die Bearbeitungsstationen B1 und B2 sind voneinander beabstandet, um die kollisionsgefährdeten Bereiche zwischen den Arbeitsräumen des Arbeitsroboters A und der Handhabungsroboter H1 und H2 zu reduzieren.

Zur Zwischenlagerung der Werkstücke weist die Laserzelle 20 einen ersten Pufferbereich P1 mit einem ersten und zweiten Zwischenpuffer ZP1 und ZP2, sowie einen zweiten Pufferbereich P2 mit einem dritten und vierten Zwischenpuffer ZP3 und ZP4 auf.

Die Pufferbereiche P1 und P2 sind jeweils als Werkstückschleuse in die Schutzeinhausung 22 der Laserzelle 20 integriert. Hierbei ist jeder Zwischenpuffer ZP1, ZP2, ZP3 und ZP4 jeweils als Linearschleuse ausgebildet mit einer zum Inneren der Laserzelle gerichteten Innenöffnung, sowie einer nach außen in die Umgebung der Laserzelle gerichteten Außenöffnung. Die Öffnungen sind jeweils durch Tore T1 bis T8 in Form von Rolltoren verschließbar. Die Wandung der Zwischenpuffer ZP1, ZP2, ZP3 und ZP4 sowie die Rolltore sind Teil der Schutzeinhausung 22 der Laserzelle 20 und genügen als solche den entsprechenden Anforderungen zur Lasersicherheit.

Der Materialfluss, d.h. die Zufuhr und Abfuhr von Werkstücken W zu und von der Bearbeitungsstation, erfolgt für die erste Bearbeitungsstation B1 und die zweite Bearbeitungsstation B2 auf getrennten Wegen.

Zur Bestückung bzw. Entleerung ist der ersten Bearbeitungsstation B1 ein erster Handhabungsroboter H1 innerhalb der Laserzelle 20, der erste Pufferbereich P1 und ein erster äußerer Handhabungsroboter HA1 außerhalb der Laserzelle 20 zugeordnet. Werkstücke, die an der ersten Bearbeitungsstation B1 bearbeitet werden sollen oder bearbeitet worden sind, werden mittels des ersten Handhabungsroboters H1 und des ersten äußeren Handhabungsroboter HA1 dem ersten Pufferbereich P1 entnommen und zugeführt.

Zur Bestückung bzw. Entleerung ist der zweiten Bearbeitungsstation B2 ein zweiter Handhabungsroboter H2 innerhalb der Laserzelle 20, der zweite Pufferbereich P2 und ein zweiter äußerer Handhabungsroboter HA2 außerhalb der Laserzelle 20 zugeordnet. Werkstücke, die an der zweiten Bearbeitungsstation B2 bearbeitet werden sollen oder bearbeitet worden sind, werden mittels des zweiten Handhabungsroboters H2 und des zweiten äußeren Handhabungsroboter HA2 dem zweiten Pufferbereich P2 entnommen und zugeführt.

Über die äußeren Handhabungsroboter HA1 und HA2 ist die Laser- Remote-Bearbeitungsanlage 10 in eine Fertigungslinie eingebunden. Die äußeren Handhabungsroboter HA1 und HA2 können hierzu z.B. in Interaktion mit anderen nicht dargestellte Fertigungsvorrichtungen oder Puffersystemen treten und Werkstücke übergeben bzw. übernehmen.

Die Handhabungsroboter H1, H2, HA1, HA2 sind jeweils in Form eines mindestens fünf-achsigen Gelenkarmroboters vorgesehen. Zur Vergrößerung des Arbeitsraumes und zur schnelleren Handhabung verfügen die Handhabungsroboter H1, H2, HA1, HA2 jeweils zusätzlich über eine translatorische Achse, die längs des zugeordneten Pufferbereichs P1 bzw. P2 angeordnet ist. Die Handhabungsroboter H1, H2, HA1, HA2 sind mit einer geeigneten Greifvorrichtung zur Handhabung der Werkstücke eingerichtet.

Die Steuerung der Anlage 10 erfolgt über eine nicht dargestellte Steuerungsvorrichtung in Form einer speicherprogrammierbaren Steuerung, welche die Roboterbewegungen, die Schleusentore und die Remote-Schweißvorrichtung steuert.

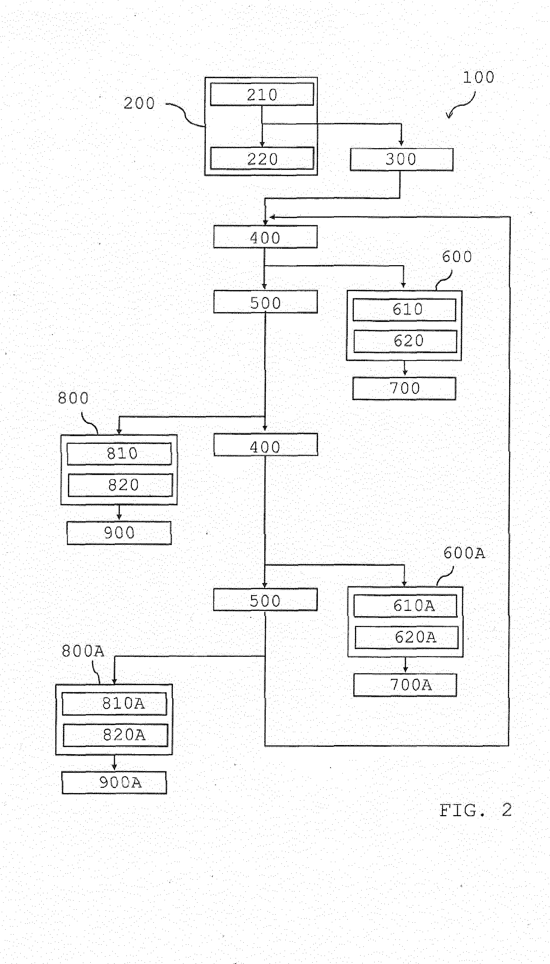

Die Doppelpfeile in Figur 1 deuten an, wie die Werkstücke innerhalb der Bearbeitungsanlage bewegt werden. Ein detaillierter Verfahrensablauf ist nachfolgend anhand des in Figur 2 gezeigten Beispiels beschrieben.

In der in Figur 1 dargestellten Laser-Remote-Bearbeitungsanlage 10 werden vorzugsweise an beiden Bearbeitungsstationen baugleiche Werkstücke W bearbeitet und der Bearbeitungsprozess ist an beiden Bearbeitungsstationen B1 und B2 identisch. Alternativ kann die dargestellte Anlage, z.B. durch die Verwendung bauteilspezifischer Greifvorrichtungen und Spannvorrichtungen, dazu verwendet werden, an der ersten Bearbeitungsstation B1 andersartige Werkstücke als an der zweiten Bearbeitungsstation B2 zu bearbeiten. Ebenso ist es möglich, dass der Arbeitsroboter A an der ersten bzw. zweiten Bearbeitungsstation unterschiedliche Bearbeitungsprozesse durchführt.

Figur 2 zeigt ein Ablaufdiagramm zur Veranschaulichung einer beispielhaften Prozessführung.

Das Verfahren 100 beginnt mit der Erstbefüllung der Pufferbereiche P1 und P2 in Schritt 200. Hierzu werden zunächst in Schritt 210 die Zwischenpuffer ZP1 und ZP3 gefüllt, wozu das äußere Rolltor T1 des Zwischenpuffers ZP1 und das äußere Rolltor T5 des Zwischenpuffers ZP3 geöffnet werden, der äußere Handhabungsroboter HA1 ein zu bearbeitendes Werkstück W in den Zwischenpuffer ZP1 ablegt, der äußere Handhabungsroboter HA2 ein zu bearbeitendes Werkstück W in den Zwischenpuffer ZP3 ablegt und die Rolltore T1 und T5 geschlossen werden.

Daran anschließend werden in Schritt 220 die Zwischenpuffer ZP2 und ZP4 gefüllt, wozu das äußere Rolltor T3 des Zwischenpuffers ZP2 und das äußere Rolltor T7 des Zwischenpuffers ZP4 geöffnet werden, der äußere Handhabungsroboter HA1 ein zu bearbeitendes Werkstück W in den Zwischenpuffer ZP2 ablegt, der äußere Handhabungsroboter HA2 ein zu bearbeitendes Werkstück W in den Zwischenpuffer ZP4 ablegt und die Rolltore T3 und T7 geschlossen werden.

Im Anschluss an das Befüllen der Zwischenpuffer ZP1 und ZP3 (Schritt 210) startet das Erstbestücken der Bearbeitungsstationen B1 und B2 mit Werkstücken, dargestellt als Prozessabschnitt 300. Hierzu werden die inneren Rolltore T2 und T6 geöffnet, der erste Handhabungsroboter H1 entnimmt dem Zwischenpuffer ZP1 das zuvor dort abgelegte Werkstück W und der zweite Handhabungsroboter H2 entnimmt dem Zwischenpuffer ZP3 das zuvor dort abgelegte Werkstück W. Die Rolltore T2 und T6 werden geschlossen und die Handhabungsroboter H1 bzw. H2 legen die Werkstücke auf der ersten bzw. zweiten Bearbeitungsstation B1 bzw. B2 ab. Schritt 300 findet vorzugsweise simultan mit Schritt 220 statt.

Nachfolgend führt der Arbeitsroboter A in Schritt 400 einen Werkstückbearbeitungsprozess, z.B. einen Schweißprozess, an dem Werkstück W in der ersten Bearbeitungsstation B1 aus.

Mit Ende des Schritts 400, also nach Abschluss des Bearbeitungsprozesses an Bearbeitungsstation B1, werden zwei weitere Prozessschritte eingeleitet.

Zum einen wendet sich der Arbeitsroboter A in Schritt 500 der zweiten Bearbeitungsstation B2 zu und führt dort einen Werkstückbearbeitungsprozess, z.B. eine Schweißprozess, aus.

Zum anderen wird in Schritt 600 die erste Bearbeitungsstation B1 auf einen nachfolgenden Werkstückbearbeitungsprozess vorbereitet. Schritt 600 umfasst zwei Einzelschritte 610 und 620. Zunächst wird in Schritt 610 das zuvor bearbeitete Werkstück in den ersten Pufferbereich P1 verbracht. Hierzu entnimmt der erste Handhabungsroboter H1 das zuvor bearbeitete Werkstück aus der Bearbeitungsstation B1, das innere Rolltor T2 öffnet, der Handhabungsroboter H1 legt das Werkstück in den ersten Zwischenpuffer ZP1 ab und das Rolltor T2 schließt. In dem nachfolgenden Schritt 620 wird die erste Bearbeitungsstation B1 mit einem zu bearbeitenden Werkstück aus dem ersten Pufferbereich P1 bestückt. Hierzu wird das innere Rolltor T4 geöffnet, der Handhabungsroboter H1 entnimmt dem Zwischenpuffer ZP2 das zu bearbeitende Werkstück, legt dieses in die erste Bearbeitungsstation B1 ab und das Rolltor T4 schließt. Damit endet Schritt 600.

Zum jetzigen Zeitpunkt ist im ersten Zwischenpuffer ZP1 ein bereits bearbeitetes Werkstück abgelegt, der zweite Zwischenpuffer ZP2 ist leer. Im nachfolgenden Schritt 700 erfolgt eine Neubestückung des ersten Pufferbereichs P1. Hierzu wird Rolltor T1 geöffnet, der äußere Handhabungsroboter HA1 entnimmt das bearbeitete Bauteil aus dem ersten Zwischenpuffer ZP1, bestückt den ersten Zwischenpuffer ZP1 mit einem weiteren zu bearbeitenden Werkstück und Rolltor T1 schließt. Zwischenpuffer ZP2 verbleibt leer.

Im Anschluss an Schritt 500 werden erneut zwei simultane Prozessabschnitte eingeleitet. Zum einen führt der Arbeitsroboter A erneut Schritt 400 aus, d.h. er wendet sich der ersten Bearbeitungsstation B1 zu und führt dort den Werkstückbearbeitungsprozess aus.

Zum anderen werden die Schritte 800 und 900 ausgeführt. In Schritt 800 wird die zweite Bearbeitungsstation B2 auf einen nachfolgenden Werkstückbearbeitungsprozess vorbereitet. Schritt 800 umfasst zwei Einzelschritte 810 und 820. Zunächst wird in Schritt 810 das zuvor bearbeitete Werkstück in den zweiten Pufferbereich P2 verbracht. Hierzu entnimmt der zweite Handhabungsroboter H2 das zuvor bearbeitete Werkstück aus der Bearbeitungsstation B2, das innere Rolltor T6 öffnet, der Handhabungsroboter H2 legt das Werkstück in den dritten Zwischenpuffer ZP3 ab und das Rolltor T6 schließt. In dem nachfolgenden Schritt 820 wird die zweite Bearbeitungsstation B2 mit einem zu bearbeitenden Werkstück aus dem zweiten Pufferbereich P2 bestückt. Hierzu wird das innere Rolltor T8 geöffnet, der zweite Handhabungsroboter H2 entnimmt dem vierten Zwischenpuffer ZP4 das zu bearbeitende Werkstück, legt dieses in die zweite Bearbeitungsstation B2 ab und das Rolltor T8 schließt. Damit endet Schritt 800.

Zum jetzigen Zeitpunkt ist im dritten Zwischenpuffer ZP3 ein bereits bearbeitetes Werkstück abgelegt, der vierte Zwischenpuffer ZP4 ist leer. Im nachfolgenden Schritt 900 erfolgt eine Neubestückung des zweiten Pufferbereichs P2. Hierzu wird Rolltor T5 geöffnet, der zweite äußere Handhabungsroboter HA2 entnimmt das bearbeitete Werkstück aus dem Zwischenpuffer ZP3, bestückt den Zwischenpuffer ZP3 mit einem weiteren zu bearbeitenden Werkstück und Rolltor T5 schließt. Zwischenpuffer ZP4 verbleibt leer.

Im Anschluss an Schritt 400 werden erneut zwei simultane Prozessabschnitte eingeleitet. Zum einen führt der Arbeitsroboter A wieder Schritt 500 aus, d.h. er wendet sich der zweiten Bearbeitungsstation B2 zu und führt dort den Werkstückbearbeitungsprozess aus.

Zum anderen werden die Schritte 600A und 700A ausgeführt. In Schritt 600A wird die erste Bearbeitungsstation B1 auf einen nachfolgenden Werkstückbearbeitungsprozess vorbereitet. Schritt 600A umfasst zwei Einzelschritte 610A und 620A. Zunächst wird in Schritt 610A das zuvor bearbeitete Werkstück in den ersten Pufferbereich P1 verbracht. Schritt 610A unterscheidet sich von Schritt 610 dadurch, dass das bearbeitete Werkstück nicht in den ersten Zwischenpuffer ZP1, sondern den zu diesem Zeitpunkt noch leeren zweiten Zwischenpuffer ZP2 abgelegt wird. Hierzu entnimmt der erste Handhabungsroboter H1 das zuvor bearbeitete Werkstück aus der Bearbeitungsstation B1, das Rolltor T4 öffnet, der Handhabungsroboter H1 legt das Werkstück in den zweiten Zwischenpuffer ZP2 ab und das Rolltor T4 schließt. In dem nachfolgenden Schritt 620A wird die erste Bearbeitungsstation B1 mit einem zu bearbeitenden Werkstück bestückt. Schritt 620A unterscheidet sich von Schritt 620 dadurch, dass das Werkstück nicht dem zweiten, sondern dem ersten Zwischenpuffer ZP1 entnommen wird. Hierzu wird das Rolltor T2 geöffnet, der Handhabungsroboter H1 entnimmt dem Zwischenpuffer ZP1 das zu bearbeitende Werkstück, legt dieses in die erste Bearbeitungsstation B1 ab und das Rolltor T2 schließt. Damit endet Schritt 600A.

Zum jetzigen Zeitpunkt ist im Zwischenpuffer ZP2 ein bereits bearbeitetes Werkstück abgelegt, Zwischenpuffer ZP1 ist leer. Im nachfolgenden Schritt 700A erfolgt eine Neubestückung des ersten Pufferbereichs P1. Hierzu wird Rolltor T3 geöffnet, der äußere Handhabungsroboter HA1 entnimmt das bearbeitete Bauteil aus dem zweiten Zwischenpuffer ZP2, bestückt den zweiten Zwischenpuffer ZP2 mit einem weiteren zu bearbeitenden Werkstück und Rolltor T1 schließt. Zwischenpuffer ZP1 verbleibt leer.

Im Anschluss an Schritt 500 werden erneut zwei simultane Prozessabschnitte eingeleitet. Zum einen führt der Arbeitsroboter A wieder Schritt 400 aus, d.h. er wendet sich der ersten Bearbeitungsstation B1 zu und führt dort den Werkstückbearbeitungsprozess aus.

Zum anderen werden die Schritte 800A und 900A ausgeführt. In Schritt 800A wird die zweite Bearbeitungsstation B2 auf eine nachfolgenden Werkstückbearbeitungsprozess vorbereitet. Schritt 800A umfasst zwei Einzelschritte 810A und 820A. Zunächst wird in Schritt 810A das zuvor bearbeitete Werkstück in den zweiten Pufferbereich P2 verbracht. Schritt 810A unterscheidet sich von Schritt 810 dadurch, dass das bearbeitete Werkstück nicht in den dritten Zwischenpuffer ZP3, sondern den zu diesem Zeitpunkt noch leeren vierten Zwischenpuffer ZP4 abgelegt wird. Hierzu entnimmt der zweite Handhabungsroboter H2 das zuvor bearbeitete Werkstück aus der zweiten Bearbeitungsstation B2, das Rolltor T8 öffnet, der Handhabungsroboter H2 legt das Werkstück in den vierten Zwischenpuffer ZP4 ab und das Rolltor T8 schließt. In dem nachfolgenden Schritt 820A wird die zweite Bearbeitungsstation B2 mit einem zu bearbeitenden Werkstück bestückt. Schritt 820A unterscheidet sich von Schritt 820 dadurch, dass das Werkstück nicht dem vierten, sondern dem dritten Zwischenpuffer ZP3 entnommen wird. Hierzu wird das Rolltor T6 geöffnet, der Handhabungsroboter H2 entnimmt dem Zwischenpuffer ZP3 das zu bearbeitende Werkstück, legt dieses in die zweite Bearbeitungsstation B2 ab und das Rolltor T6 schließt. Damit endet Schritt 800A.

Zum jetzigen Zeitpunkt ist im Zwischenpuffer ZP4 ein bereits bearbeitetes Werkstück abgelegt, Zwischenpuffer ZP3 ist leer. Im nachfolgenden Schritt 900A erfolgt eine Neubestückung des zweiten Pufferbereichs P2. Hierzu wird Rolltor T7 geöffnet, der äußere Handhabungsroboter HA2 entnimmt das bearbeitete Bauteil aus dem Zwischenpuffer ZP4, bestückt den Zwischenpuffer ZP4 mit einem weiteren zu bearbeitenden Werkstück und Rolltor T7 schließt. Zwischenpuffer ZP3 verbleibt leer.

Zu diesem Zeitpunkt des Prozessablaufs herrscht in den Zwischenpuffern die gleiche Beladungssituation wie nach Schritt 300. Der Prozess kann durch fortlaufendes Wiederholen des voranstehend beschriebenen Prozessablaufs ab Schritt 400 weitergeführt werden, wie in Figur 2 dargestellt.

Bei dieser Verfahrensführung werden die bearbeiteten Werkstücke immer in denselben Zwischenspeicher gelegt, aus dem sie auch zur Bearbeitung entnommen wurden. Dies vereinfacht die Zuordnung.

Die Schritte 600 und 700 bzw. 600A und 700A erfolgen simultan zu Schritt 500 und die Schritte 800 und 900 bzw. 800A und 900A erfolgen simultan zu Schritt 400, wodurch der Anteil der Prozesszeit an der Gesamttaktung der Anlage 10 erhöht wird. Unproduktive Nebenzeiten werden reduziert, da das Werkstückhandling zeitlich parallel zum Bearbeitungsprozess erfolgt. Vorzugsweise benötigen die Schritte 600 und 700 bzw. 600A und 700A zusammen weniger Zeit oder dieselbe Zeit wie der Bearbeitungsprozess in Schritt 500 und die Schritte 800 und 900 bzw. 800A und 900A benötigen zusammen weniger Zeit oder dieselbe Zeit wie der Bearbeitungsprozess in Schritt 400.

Die Ausführungsbeispiele sind nicht maßstabsgetreu und nicht beschränkend. Abwandlungen im Rahmen des fachmännischen Handelns sind möglich.

### Bezugszeichenliste

- 10: Laser-Remote-Bearbeitungsanlage
- 20: Laserzelle
- 22: Schutzeinhausung
- A: Arbeitsroboter
- B1, B2: Bearbeitungsstation
- H1, H2, HA1, HA2: Handhabungsroboter
- T1 bis T8: Tore
- P1, P2: Pufferbereiche
- W: Werkstück
- ZP1, ZP2, ZP3, ZP4: Zwischenpuffer
- 100 bis 900, 600A bis 900A: Verfahrensschritte

## Patentansprüche

1. Laser-Remote-Bearbeitungsanlage mit
einer von einer Schutzeinhausung (22) umgebenen Laserzelle (20), in der ein Arbeitsroboter (A) mit einem Remote-Laserwerkzeug, eine erste Bearbeitungsstation (B1) im Arbeitsbereich des Arbeitsroboters (A) und eine zweite Bearbeitungsstation (B2) im Arbeitsbereich des Arbeitsroboters (A) angeordnet sind,
**dadurch gekennzeichnet, dass**
innerhalb der Schutzeinhausung (22) weiterhin
- mindestens ein Handhabungsroboter (H1, H2) angeordnet ist, mit dem Werkstücke zwischen der ersten Bearbeitungsstation (B1) oder der zweiten Bearbeitungsstation (B2) und einem Pufferbereich (P1), der zur Zwischenlagerung von bereits bearbeiteten oder noch zu bearbeitenden Werkstücken dient, umpositionierbar sind,
- wobei der Pufferbereich (P1) zur Aufnahme von Werkstücken (W) eingerichtet ist und als automatisierbar betätigbare Werkstückschleuse (ZP1) in die Schutzeinhausung (22) integriert ist.

2. Laser-Remote-Bearbeitungsanlage nach Patentanspruch 1, **dadurch gekennzeichnet, dass**
es sich um eine Laser-Remote-Schweißanlage handelt.

3. Laser-Remote-Bearbeitungsanlage nach Patentanspruch 1 oder 2, **dadurch gekennzeichnet, dass**
die Werkstückschleuse (ZP1) als Linearschleuse mit sich gegenüberliegendem Innentor (T2) und Außentor (T1) ausgebildet ist.

4. Laser-Remote-Bearbeitungsanlage nach einem der vorangehenden Patentansprüche,
**gekennzeichnet durch**
zumindest einen äußeren Handhabungsroboter (HA1), der außerhalb der Schutzeinhausung (22) angeordnet ist und mit dem Werkstücke (W) aus der Werkstückschleuse (ZP1) entnehmbar sind oder in diese verbringbar sind.

5. Laser-Remote-Bearbeitungsanlage nach einem der vorangehenden Patentansprüche,
**dadurch gekennzeichnet, dass**
zwei voneinander beabstandete Pufferbereiche vorgesehen sind, wobei ein erster Pufferbereich (P1) der ersten Bearbeitungsstation (B1) zugeordnet ist und ein zweiter Pufferbereich (P2) der zweiten Bearbeitungsstation (B2) zugeordnet ist.

6. Laser-Remote-Bearbeitungsanlage nach einem der vorangehenden Patentansprüche,
**dadurch gekennzeichnet, dass**
der Pufferbereich (P1; P2) eine erste Schleusenkammer (ZP1; ZP3) und zweite Schleusenkammer (ZP2; ZP4) aufweist, die räumlich voneinander getrennt und unabhängig voneinander betätigbar sind.

7. Laser-Remote-Bearbeitungsanlage nach Patentanspruch 5 oder 6,
**dadurch gekennzeichnet, dass**
innerhalb der Schutzeinhausung (22) zwei Handhabungsroboter vorgesehen sind, wobei ein erster Handhabungsroboter (H1) der ersten Bearbeitungsstation (B1) und dem ersten Pufferbereich (P1) zugeordnet ist und der zweite Handhabungsroboter (P2) der zweiten Bearbeitungsstation (B2) und dem zweiten Pufferbereich (P2) zugeordnet ist und
zwei äußere Handhabungsroboter außerhalb der Schutzeinhausung angeordnet sind, wobei ein erster äußerer Handhabungsroboter (HA1) dem ersten Pufferbereich (P1) zugeordnet ist und ein zweiter äußerer Handhabungsroboter (HA2) dem zweiten Pufferbereich zugeordnet ist.

8. Laser-Remote-Bearbeitungsanlage nach einem der vorangehenden Patentansprüche,
**dadurch gekennzeichnet, dass** die Roboter (A, H1, H2, HA1, HA2) Mehrachs-Gelenkarmroboter sind und die Handhabungsroboter (H1, H2, HA1, HA2) zusätzlich über eine Linearachse verfügen.

9. Laser-Remote-Bearbeitungsanlage nach einem der vorangehenden Patentansprüche,
**gekennzeichnet durch**
eine Steuerungsvorrichtung, die eingerichtet ist, um einen Laserbearbeitungsprozess zu steuern, so dass wechselweise ein Laserbearbeitungsprozess an einer der Bearbeitungsstationen (B1; B2) durchgeführt wird, während simultan eine Vorbereitung der anderen Bearbeitungsstation (B2; B1) erfolgt.

10. Laser-Remote-Bearbeitungsanlage nach einem der vorangehenden Patentansprüche,
**dadurch gekennzeichnet, dass**
die Laser-Remote-Bearbeitungsanlage (10) durch den äußeren Handhabungsroboter (HA1) oder die äußeren Handhabungsroboter (HA1, HA2) in zumindest eine Fertigungslinie eingebunden ist.

11. Verfahren zum Betrieb einer Laser-Remote-Bearbeitungsanlage,
mit den Schritten:
a) Durchführen einer Werkstückbearbeitung (400) an einer von zwei Bearbeitungsstationen (B1) innerhalb einer Schutzeinhausung (22) einer Laserzelle (20) durch einen Arbeitsroboter (A) mit Laser-Remote-Werkzeug, und
b) Vorbereiten (800) der anderen Bearbeitungsstation (B2) für eine nachfolgende Werkstückbearbeitung,
wobei der Schritt b) simultan mit Schritt a) stattfindet und die Schritte a) und b) wechselweise für die erste und zweite Bearbeitungsstation (B1, B2) durchgeführt werden **gekennzeichnet dadurch, dass**
das Vorbereiten der anderen Bearbeitungsstation (B2) durch einen Handhabungsroboter (H2) erfolgt und die Schritte umfasst:
- Verbringen eines zuvor bearbeiteten Werkstücks von der anderen Bearbeitungsstation (B2) in einen Pufferbereich (P2), der als automatisierbar betätigbare Werkstückschleuse in die Schutzeinhausung (22) der Laserzelle (20) integriert ist und
- Verbringen eines zu bearbeitenden Werkstücks aus dem Pufferbereich (P2) zu der anderen Bearbeitungsstation (B2) .

12. Verfahren nach Patentanspruch 11, mit dem weiteren Schritt:
c) Neubestücken (900) des Pufferbereichs (P2),
wobei Schritt c) nach Schritt b) und simultan zu Schritt a) ausgeführt wird.

13. Verfahren nach einem der Patentansprüche 11 bis 12,
bei dem der Materialfluss zu und von der ersten Bearbeitungsstation (B1) räumlich getrennt von dem Materialfluss zu und von der zweiten Bearbeitungsstation (B2) erfolgt.

14. Verfahren nach einem der Patentansprüche 11 bis 13,
das vollautomatisch durchgeführt wird.

## Claims

1. Remote laser processing installation having a laser cell (20), which is surrounded by a protective enclosure (22) and in which are arranged a working robot (A), with a remote laser tool, a first processing station (B1) in the working region of the working robot (A) and a second processing station (B2) in the working region of the working robot (A),
**characterized in that**
also arranged within the protective enclosure (22) is
- at least one handling robot (H1, H2), by means of which it is possible to reposition workpieces between the first processing station (B1) or the second processing station (B2) and a buffer region (P1), which serves for the interim storage of already processed or yet to be processed workpieces,
- wherein the buffer region (P1) is intended to accommodate workpieces (W) and is integrated, in the form of an automatable actuable workpiece airlock (ZP1), in the protective enclosure (22).

2. Remote laser processing installation according to Patent Claim 1, **characterized in that**
it is a remote laser welding installation.

3. Remote laser processing installation according to Patent Claim 1 or 2, **characterized in that** the workpiece airlock (ZP1) is designed in the form of a linear airlock with an internal door (T2) and external door (T1) located opposite one another.

4. Remote laser processing installation according to one of the preceding patent claims,
**characterized by**
at least one external handling robot (HA1), which is arranged outside the protective enclosure (22) and by means of which workpieces (W) can be removed from the workpiece airlock (ZP1) or can be moved into the same.

5. Remote laser processing installation according to one of the preceding patent claims,
**characterized in that**
two spaced-apart buffer regions are provided, wherein a first buffer region (P1) is assigned to the first processing station (B1) and a second buffer region (P2) is assigned to the second processing station (B2).

6. Remote laser processing installation according to one of the preceding patent claims,
**characterized in that**
the buffer region (P1; P2) has a first airlock chamber (ZP1; ZP3) and second airlock chamber (ZP2; ZP4), which are spatially separated from one another and can be actuated independently of one another.

7. Remote laser processing installation according to Patent Claim 5 or 6,
**characterized in that**
two handling robots are provided within the protective enclosure (22), wherein a first handling robot (H1) is assigned to the first processing station (B1) and to the first buffer region (P1) and the second handling robot (P2) is assigned to the second processing station (B2) and to the second buffer region (P2), and
two external handling robots are arranged outside the protective enclosure, wherein a first external handling robot (HA1) is assigned to the first buffer region (P1) and a second external handling robot (HA2) is assigned to the second buffer region.

8. Remote laser processing installation according to one of the preceding patent claims,
**characterized in that** the robots (A, H1, H2, HA1, HA2) are multi-axis articulated robots and the handling robots (H1, H2, HA1, HA2) additionally have a linear axis.

9. Remote laser processing installation according to one of the preceding patent claims,
**characterized by**
a control apparatus which is intended to control a laser-processing procedure so that, alternately, a laser-processing procedure is carried out at one of the processing stations (B1; B2) while, at the same time, the other processing station (B2; B1) is being prepared.

10. Remote laser processing installation according to one of the preceding patent claims,
**characterized in that**
the remote laser processing installation (10) is incorporated in at least one manufacturing line by the external handling robot (HA1) or the external handling robots (HA1, HA2).

11. Method of operating a remote laser processing installation,
having the following steps:
a) carrying out workpiece processing (400) at one of two processing stations (B1) within a protective enclosure (22) of a laser cell (20) using a working robot (A) with a remote laser tool, and
b) preparing (800) the other processing station (B2) for subsequent workpiece processing,
wherein step b) takes place at the same time as step a) and steps a) and b) are carried out alternately for the first and second processing stations (B1, B2), **characterized in that**
the preparation of the other processing station (B2) is carried out using a handling robot (H2) and comprises the following steps:
- moving a previously processed workpiece from the other processing station (B2) into a buffer region (P2) which is integrated, in the form of an automatable actuable workpiece airlock, in the protective enclosure (22) of the laser cell (20), and
- moving from the buffer region (P2) to the other processing station (B2) a workpiece which is to be processed.

12. Method according to Patent Claim 11, having the following further step:
c) re-charging (900) the buffer region (P2),
wherein step c) is performed after step b) and at the same time as step a).

13. Method according to either of Patent Claims 11 and 12, in the case of which the material flow to and from the first processing station (B1) is spatially separate from the material flow to and from the second processing station (B2).

14. Method according to one of Patent Claims 11 to 13, which is implemented fully automatically.

## Revendications

1. Système de télétraitement au laser comprenant une cellule laser (20) qui est entourée d'un boîtier de protection (22) et dans laquelle sont disposés un robot de travail (A) muni d'un télé-outil laser, un premier poste de traitement (B1) dans la zone de travail du robot de travail (A) et un deuxième poste de traitement (B2) dans la zone de travail du robot de travail (A), **caractérisé en ce que**
en outre à l'intérieur du boîtier de protection (22)
- au moins un robot de manutention (H1, H2) est disposé au moyen duquel des pièces peuvent être repositionnées entre le premier poste de traitement (B1) ou le deuxième poste de traitement (B2) et une zone tampon (P1) qui est utilisée pour le stockage intermédiaire de pièces qui ont déjà été traitées ou qui restent à traiter,
- la zone tampon (P1) étant conçue pour recevoir des pièces à traiter (W) et étant intégrée dans le boîtier de protection (22) comme sas de pièces (ZP1) qui peut être actionné automatiquement.

2. Système de télétraitement au laser selon la revendication 1, **caractérisé en ce que** ledit système est un système de télé-soudage au laser.

3. Système de télétraitement au laser selon la revendication 1 ou 2, **caractérisé en ce que** le sas de pièces (ZP1) est réalisé sous la forme d'un sas linéaire pourvu d'une porte intérieure (T2) et d'une porte extérieure (T1) opposées l'une à l'autre.

4. Système de télétraitement au laser selon l'une des revendications précédentes,
**caractérisé par**
au moins un robot de manipulation extérieur (HA1) qui est disposé à l'extérieur du boîtier de protection (22) et au moyen duquel des pièces (W) peuvent être retirées du sas de pièce (ZP1) ou amenées dans celui-ci.

5. Système de télétraitement au laser selon l'une des revendications précédentes,
**caractérisé en ce que**
deux zones tampons espacées l'une de l'autre sont prévues, une première zone tampon (P1) étant associée au premier poste de traitement (B1) et une deuxième zone tampon (P2) étant associée au deuxième poste de traitement (B2).

6. Système de télétraitement au laser selon l'une des revendications précédentes,
**caractérisé en ce que**
la zone tampon (P1 ; P2) comporte une première chambre de sas (ZP1 ; ZP3) et une deuxième chambre de sas (ZP2 ; ZP4) qui sont spatialement séparées l'une de l'autre et qui peuvent être actionnées indépendamment l'une de l'autre.

7. Système de télétraitement au laser selon la revendication 5 ou 6,
**caractérisé en ce que**
deux robots de manutention sont prévus à l'intérieur du boîtier de protection (22), un premier robot de manutention (H1) étant associé au premier poste de traitement (B1) et à la première zone tampon (P1) et le deuxième robot de manipulation (P2) étant associé au deuxième poste de traitement (B2) et à la deuxième zone tampon (P2) et
deux robots de manipulation extérieurs sont disposés à l'extérieur du boîtier de protection, un premier robot de manipulation extérieur (HA1) étant associé à la première zone tampon (P1) et un deuxième robot de manipulation extérieur (HA2) étant associé à la deuxième zone tampon.

8. Système de télétraitement au laser selon l'une des revendications précédentes,
**caractérisé en ce que** les robots (A, H1, H2, HA1, HA2) sont des robots articulés multiaxes et les robots de manutention (H1, H2, HA1, HA2) disposent également d'un axe linéaire.

9. Système de télétraitement au laser selon l'une des revendications précédentes,
**caractérisé par**
un dispositif de commande qui est conçu pour commander un processus de traitement au laser de façon à effectuer en alternance un processus de traitement au laser au niveau de l'un des postes de traitement (B1 ; B2) tandis que l'autre poste de traitement (B2 ; B1) est en même temps en cours de préparation.

10. Système de télétraitement au laser selon l'une des revendications précédentes,
**caractérisé en ce que**
le système de télétraitement au laser (10) est inséré dans au moins une ligne de production par le robot de manipulation extérieur (HA1) ou les robots de manipulation extérieurs (HA1, HA2).

11. Procédé de fonctionnement d'un système de télétraitement au laser,
le procédé comprenant les étapes suivantes :
a) effectuer un traitement de pièce (400) au niveau de l'un des deux postes de traitement (B1) situé à l'intérieur d'un boîtier de protection (22) d'une cellule laser (20) par le biais d'un robot de travail (A) muni d'un télé-outil au laser, et
b) préparer (800) l'autre poste de traitement (B2) pour le traitement ultérieur de la pièce,
l'étape b) et l'étape a) étant effectuées simultanément et les étapes a) et b) étant effectuées en alternance pour le premier et le deuxième poste de traitement (B1, B2),
**caractérisé en ce que**
la préparation de l'autre poste de traitement (B2) est effectuée par un robot de manutention (H2) et comprend les étapes suivantes :
- amener une pièce précédemment traitée de l'autre poste de traitement (B2) à une zone tampon (P2) qui est intégrée dans le boîtier de protection (22) de la cellule laser (20) comme sas de pièces pouvant être commandé de manière automatisable et
- déplacer une pièce à traiter de la zone tampon (P2) à l'autre poste de traitement (B2).

12. Procédé selon la revendication 11, le procédé comprenant l'étape supplémentaire suivante :
c) rééquiper (900) la zone tampon (P2),
l'étape c) étant effectuée après l'étape b) et simultanément avec l'étape a).

13. Procédé selon l'une des revendications 11 et 12, dans lequel le flux de matière vers et depuis le premier poste de traitement (B1) est spatialement séparé du flux de matière vers et depuis le deuxième poste de traitement (B2).

14. Procédé selon l'une des revendications 11 à 13, lequel est mis en œuvre de manière entièrement automatique.
